(19) **Europäisches Patentamt**
**European Patent Office**
**Office européen des brevets**

(11) **EP 1 661 264 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **04766483.4**

(22) Anmeldetag: **12.08.2004**

(51) Int Cl.:
*H04B 7/04* *(2006.01)*     *H04L 1/00* *(2006.01)*

(86) Internationale Anmeldenummer:
**PCT/EP2004/051780**

(87) Internationale Veröffentlichungsnummer:
**WO 2005/025086 (17.03.2005 Gazette 2005/11)**

(54) **VERFAHREN ZUM ÜBERTRAGEN VON SIGNALEN IN EINEM FUNKKOMMUNIKATIONSSYSTEM SOWIE ENTSPRECHENDE SENDESTATION**

METHOD FOR TRANSMITTING SIGNALS IN A RADIOCOMMUNICATION SYSTEM AND CORRESPONDING TRANSMITTER STATION

PROCEDE POUR TRANSMETTRE DES SIGNAUX DANS UN SYSTEME DE RADIOCOMMUNICATION, AINSI QUE STATION EMETTRICE CORRESPONDANTE

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.09.2003 DE 10340397**

(43) Veröffentlichungstag der Anmeldung:
**31.05.2006 Patentblatt 2006/22**

(73) Patentinhaber: **Nokia Siemens Networks GmbH & Co. KG**
**81541 München (DE)**

(72) Erfinder:
• SEEGER, Alexander
  85622 Feldkirchen (DE)
• JOHAM, Michael
  80807 München (DE)
• NOSSEK, Josef
  82393 Iffeldorf (DE)
• UTSCHICK, Wolfgang
  85051 Ingolstadt (DE)
• ZERLIN, Benno
  80333 München (DE)

(56) Entgegenhaltungen:
**EP-A- 1 324 510**      **EP-A- 1 330 048**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren gemäß dem Oberbegriff des Patentanspruchs 1 sowie eine Sendestation gemäß dem Oberbegriff des Patentanspruchs 9.

So ein Verfahren beziehungsweise so eine Sendestation sind aus der EP-A-1 324 510 bekannt. Hierbei werden Signale zwischen einer sendenden Station und einer empfangenden Station eines Funkkommunikationssystems übertragen. Weiter wird zwischen den Stationen ein Pilotsignal übertragen für eine Schätzung eines Kanals der Verbindung durch die empfangende Station, wobei die Ergebnisse der Kanalschätzung zur Detektion der zu übertragenden Daten bestimmt sind. Eine Abweichung zwischen der Sendecharakteristik des für die Kanalschätzung verwendeten Pilotsignals und der Sendecharakteristik der Signale der Verbindung wird beim Verarbeiten der empfangenen Signale der Verbindung durch die empfangende Station berücksichtigt.

Bei Funkkommunikationssystemen erfolgt eine Kommunikation zwischen den an einer Verbindung beteiligten Stationen über elektromagnetische Wellen über eine Luftschnittstelle. Eine spezielle Form von Funkkommunikationssystemen sind Mobilfunksysteme, bei denen eine netzseitige Basisstation ein Versorgungsgebiet versorgt, indem sich eine Vielzahl von in der Regel mobilen Teilnehmerstationen aufhalten können. Bei zellularen Mobilfunksystemen ist eine Vielzahl von Basisstationen mit als "Funkzellen" bezeichneten Versorgungsbereichen vorgesehen, mit denen größere geografische Gebiete versorgt werden können. Beispiele für zellulare Mobilfunksysteme sind das vor allem in den USA verbreitete IS-95 sowie das vor allem in Europa dominante GSM (Global System of Mobile Communication). Momentan im Aufbau sind zellulare Mobilfunksysteme der sogenannten dritten Generation, beispielsweise CDMA2000 und UMTS (Universal Mobile Telecommunication System).

Um in den Teilnehmerstationen einfache Empfängerstrukturen, wie beispielsweise Rake-Empfänger, zu realisieren, ist es möglich, durch die Basisstation auszusendende Signale entsprechend vorzuverzerren, so dass in den empfangenden Teilnehmerstationen eine kohärente Detektion der Signalbeiträge von unterschiedlichen möglichen Ausbreitungspfade der Signale möglich ist. Bei einem Rake-Empfänger ist beispielsweise jedem Pfad ein Rake-Finger zugeordnet. Jeder Rake-Finger sammelt die Signalbeiträge eines der Ausbreitungspfade, korrigiert die Phasenverschiebung und gewichtet den Signalbeitrag im Sinne eines Maximum-Ratio-Combinings. Um die Phasenkorrektur und das reellwertige Gewichten in korrekter Weise durchführen zu können, muss die Teilnehmerstation den kompletten Vektorkanal schätzen, dass heißt die komplexe Amplitude p und den normierten Kanalvektor a für alle Ausbreitungspfade.

Für UMTS ist eine Kanalschätzung im Downlink (Richtung von der Basisstation zur Teilnehmerstation) auf Basis des sogenannten S-CPICH (Secondary Common Pilot Channel) vorgeschlagen worden, bei der eine für die Kanalschätzung notwenige Pilotsequenz von der Basisstation gleichzeitig mittels gerichteter Strahlen in mehrere Richtungen ausgesendet wird. Dabei wird zur Aussendung derselben Pilotsequenz für jede Richtung ein individueller Spreizcode verwendet. Eine Teilnehmerstation kann somit für jeden Pfad über den für sie günstigsten Richtstrahl des Pilotsignals eine Kanalschätzung durchführen, die später zur Detektion von von der Basisstation zur Teilnehmerstation zu übertragenden Daten verwendet wird.

Während bei Verwendung eines omnidirektionalen Pilotkanals nur eine Pilotsequenz von der Basisstation in alle Richtungen übertragen wird und von Teilnehmerstationen an beliebigen Orten innerhalb des Funkversorgungsbereiches der Basisstation für die Kanalschätzung verwendet werden kann, ist beim sogenannten Strahlennetz-Ansatz (Grid-of-Beams Approach), der beispielsweise beim oben erwähnten S-CPICH zum Einsatz kommt, eine Vielzahl von gerichteten Strahlen notwendig, über die jeweils die Pilotsequenz zu übertragen ist. Jedoch kann aufgrund des Strahlformungsgewinns die Aussendung der Pilotsequenzen mit verminderter Leistung im Vergleich zur omnidirektionalen Ausstrahlung über den sogenannten primary CPICH erfolgen. Bei letzterem werden unterschiedliche Pilotsignale gleichzeitig von je einer Antenne omnidirektional gesendet. Die Verwendung des S-CPICH ermöglicht eine Leistungsreduzierung aufgrund des Strahlformungsgewinns.

Werden adaptive Antennen in der Basisstation vorgesehen, ist es möglich, abweichend vom Grid-of-Beams Approach, die Pilot-sequenz auch mittels eines auf die jeweilige empfangende Teilnehmerstation ausgerichteten Strahles auszusenden. Dies erfordert jedoch, dass für jede Teilnehmerstation eine individuelle Pilotsequenz ausgesendet wird. Die Verwendung eines gemeinsamen Pilotkanals für mehrere Teilnehmerstationen ist nicht mehr möglich.

Der Erfindung liegt die Aufgabe zugrunde, ein Verfahren zum Übertragen von Signalen in einem Funkkommunikationssystem anzugeben, mit dem eine vorteilhafte Kanalschätzung und Detektion von Daten möglich ist.

Diese Aufgabe wird mit einem Verfahren gemäß Anspruch 1 sowie einer Station zum Senden gemäß Anspruch 9 gelöst. Vorteilhafte Ausführungsformen und Weiterbildungen der Erfindung sind Gegenstand der abhängigen Ansprüche.

Beim erfindungsgemäßen Verfahren zum Übertragen von Signalen einer Verbindung zwischen einer sendenden Station und einer empfangenden Station eines Funkkommunikationssystems wird zwischen den Stationen wenigstens ein Pilotsignal übertragen für eine Schätzung wenigstens eines Kanals der Verbindung durch die empfangenden Station, wobei Ergebnisse der Kanalschätzung zur Detektion von mittels der Signale der Verbindung zur empfangenden Station zu übertragenden Daten bestimmt sind. Eine Abweichung zwischen der Sendecharakteristik des für die Kanalschätzung verwendeten Pilotsignals und der Sendecharakteristik der Signale der Verbindung wird beim Erzeugen der auszusendenden Signale der Verbindung durch die sendende Station und/oder beim Verarbeiten der empfangenden Signale der Verbindung durch die empfangende Station berücksichtigt.

Unter Sendecharakteristik ist dabei die Form (zum Beispiel nur eine Hauptkeule oder mehrere Nebenkeulen) und die Richtung der ausgesendeten Signale zu verstehen. Eine Kanalschätzung ist fehlerhaft, wenn die Ausbreitungsrichtung des für die Schätzung verwendeten Pilotsignals von derjenigen der Signale der Verbindung, für die die Kanalschätzung durchgeführt wird, abweicht. Zu Fehlern kann es aber unabhängig von der Ausbreitungsrichtung des Pilotsignals und der Signale der Verbindung auch dadurch kommen, dass die Form der Sendecharakteristik für Pilotsignal einerseits und Signale der Verbindung andererseits voneinander abweicht. Im Folgenden wird häufig nur der erstgenannte Fall betrachtet, auch wenn die Ausführungen ebenso für den letztgenannten Fall zutreffen.

Die Erfindung betrifft also den Fall, bei dem die Sendecharakteristiken hinsichtlich Ausbreitungsrichtungen und/oder Form für das Pilotsignal und die Signale der Verbindung auseinanderfallen, wie dies beispielsweise bei der Verwendung adaptiver Antennen zur Aussendung der Signale der Verbindung und der Aussendung der Pilotsignale mittels eines gerichteten Strahles in einer festgelegten Richtung der Fall sein kann. Die Erfindung ist damit insbesondere anwendbar bei der Verwendung des oben genannten Grid-of-Beams Approach. Beim letztgenannten wird es häufig vorkommen, dass sich eine Teilnehmerstation nicht direkt im Hauptausbreitungspfad des Pilotstrahls befindet, so dass eine anhand dieses Pilotstrahls durchgeführte Kanalschätzung nicht in vollem Umfang zutrifft für die Signale der Verbindung, sofern letzterer mittels individuell an die Position der Teilnehmerstation angepasste gerichtete Strahlen erfolgt. Das Berücksichtigen der Abweichung zwischen den Sendecharakteristiken bzw. Ausbreitungsrichtungen des Pilotsignals einerseits und der Signale der Verbindung andererseits ermöglicht vorteilhafterweise eine zumindest teilweise Kompensation des aufgrund der Abweichung der Ausbreitungsrichtungen resultierenden Fehlers bei der anhand des Pilotsignals durchgeführten Schätzung des Kanals für die Signale der Verbindungen.

Nach einer ersten Ausführungsform der Erfindung erfolgt das Berücksichtigen der Abweichung der Sendecharakteristik empfängerseitig beim Verarbeiten der empfangenden Signale der Verbindung durch die empfangende Station. Hierfür ist es erforderlich, dass die empfangende Station eine Information über die Abweichung der Sendecharakteristiken hat. Dies ist beispielsweise dann der Fall, wenn der Teilnehmerstation durch Nutzung entsprechender Lokalisierungsverfahren wie beispielsweise GPS (Global Positioning System) die eigene Position relativ zur sendenden Station sowie die Sendecharakteristik des Pilotsignals relativ zur Basisstation bekannt ist. Die Sendecharakteristik des Pilotsignals kann der empfangenden Station beispielsweise daher bekannt sein, dass die sendende Station ihr diese über einen entsprechenden Organisationskanal mitteilt. Ist die sendende Station beispielsweise eine Basisstation eines Mobilfunksystems, und die empfangende Station eine entsprechende Teilnehmerstation, kann ein solcher Organisationskanal der Basisstation von allen Teilnehmerstation innerhalb des Funkversorgungsbereiches der Basisstation empfangen werden. Weiter wird in einem ersten Schritt ein Maß für die Abweichung der Signalcharakteristiken geschätzt. In einem zweiten Schritt werden die Signale der Verbindung vor ihrem Aussenden durch die sendende Station entsprechend dem geschätzten Maß vorverzerrt.

Nach einer zweiten Ausführungsform der Erfindung erfolgt das Berücksichtigen der Abweichung zwischen den Sendecharakteristiken sendeseitig beim Erzeugen der auszusendenden Signale der Verbindung durch die sendende Station. Das Feststellen der Abweichung ist problemlos möglich, da der sendenden Station naturgemäß die Sendecharakteristiken sowohl des Pilotsignals als auch der Signale der Verbindung bekannt sind.

Die Erfindung ist anwendbar auf beliebige Funkkommunikationssysteme, bei denen vor einer Detektion von Daten eine Kanalschätzung durchgeführt wird und bei denen es zu einer Abweichung zwischen der Sendecharakteristik des für die Kanalschätzung verwendeten Pilotsignals und der Sendecharakteristik der Signale der entsprechenden Verbindung kommen kann. Letzteres ist gleichbedeutend mit einer Abweichung der Ausbreitungspfade des Pilotsignals von den Ausbreitungspfaden der Signale der Verbindung. Somit ist die Erfindung insbesondere auch dann anwendbar, wenn sich zum Beispiel die relative Anordnung der sendenden und empfangenden Station nach der Durchführung der Kanalschätzung anhand des Pilotsignals ändert und sich damit auch der Kanal für die Signale der Verbindung ändert obwohl weiterhin die Ergebnisse der vorhergehenden Kanalschätzung verwendet werden soll. Die Erfindung eignet sich besonders gut zur Anwendung in Funkkommunikationssystemen mit mobilen sendenden oder empfangenden Stationen.

Nach einer Weiterbildung dieses Gegenstandes werden zur Durchführung des ersten Schrittes die Ergebnisse einer Schätzung des wenigstens einen Kanals der Verbindung in der sendenden Station bereitgestellt und zum Bestimmen des Maßes der Abweichung die Ergebnisse dieser Kanalschätzung mit einer Information über die Sendecharakteristik des Pilotsignals verknüpft.

Die in der sendenden Station bereitgestellten Ergebnisse der Kanalschätzung können entweder auf der anhand des Pilotsignals durchgeführten Kanalschätzung durch die empfangende Station beruhen und der sendenden Station von der empfangenden Station mitgeteilt werden. Dies hat den Vorteil, dass die Ergebnisse derselben in der empfangenden Station durchgeführten Kanalschätzung sowohl in der empfangenden Station zur Detektion der Daten verwendet werden können, als auch in der sendenden Station zur Vorverzerrung der zu übertragenden Signale, mit denen die Daten übertragen werden.

Es ist aber auch alternativ möglich, dass die in der sendenden Station bereitgestellten Ergebnisse der Kanalschätzung durch die sendende Station selbst ermittelt werden, indem sie eine eigene Kanalschätzung für den Kanal zwischen der sendenden Station und der empfangenden Station durchführt. Dies kann beispielsweise dadurch geschehen, dass die Ergebnisse der Kanalschätzung aus Ergebnissen einer Schätzung des Kanals für die umgekehrte Übertragungsrichtung (also von der empfangenden Station zur sendenden Station) abgeleitet werden. Insbesondere, wenn für beide Übertragungsrichtungen dieselbe Frequenz verwendet wird, wie bei einem TDD-Verfahren (Time Division Duplex), kann von einer Reziprozität der Kanäle in beide Übertragungsrichtungen ausgegangen werden, so dass die Ergebnisse der Kanalschätzungen für beide Übertragungsrichtungen weitestgehend übereinstimmen.

Nach einer Weiterbildung der Erfindung betreffen die in der sendenden Station bereitgestellten Ergebnisse der Kanalschätzung jeweils eine Kovarianzmatrix für jeden der Kanäle der Verbindung. Für jede Kovarianzmatrix erfolgt eine Eigenwertzerlegung, indem Eigenvektoren mit den dominanten Eigenwerten bestimmt werden. Das Maß der Abweichung wird bestimmt, indem ein Ergebnis der Eigenwertzerlegung mit der Information über die Sendecharakteristik des Pilotsignals verknüpft wird.

Es ist günstig, wenn die empfangende Station für die Datendetektion einen Rake-Empfänger verwendet. Durch das erfindungsgemäße Berücksichtigen der Abweichung zwischen den Sendecharakteristiken des Pilotsignals und der Signale der Verbindung ist es nämlich trotz der Abweichung vorteilhaft möglich, eine kohärente Detektion am Ausgang des Rake-Empfängers zu erreichen.

Nach einer Weiterbildung der Erfindung sendet die sendende Station eine Mehrzahl von Pilotsignalen in jeweils festgelegte Richtungen aus und die empfangende Station verwendet wenigstens eines dieser Pilotsignale für die Kanalschätzung. Damit eignet sich die Erfindung insbesondere zum Einsatz beim obengenannten Grid-of-Beams Approach.

Die Erfindung wird im Folgenden anhand von in den Figuren dargestellten Ausführungsbeispielen näher erläutert. Es zeigen:

Figur 1    die Aussendung einer Mehrzahl von Pilotsignalen durch eine sendende Station beim sogenannten Grid-of-Beams Approach,

Figur 2    die Abweichung der Ausbreitungsrichtungen eines für die Kanalschätzung verwendeten Pilotsignals und Signalen einer Verbindung,

Figur 3    Komponenten der sendenden Station aus den Figuren 1 und 2 und

Figur 4    Komponenten einer empfangenden Station aus Figur 2.

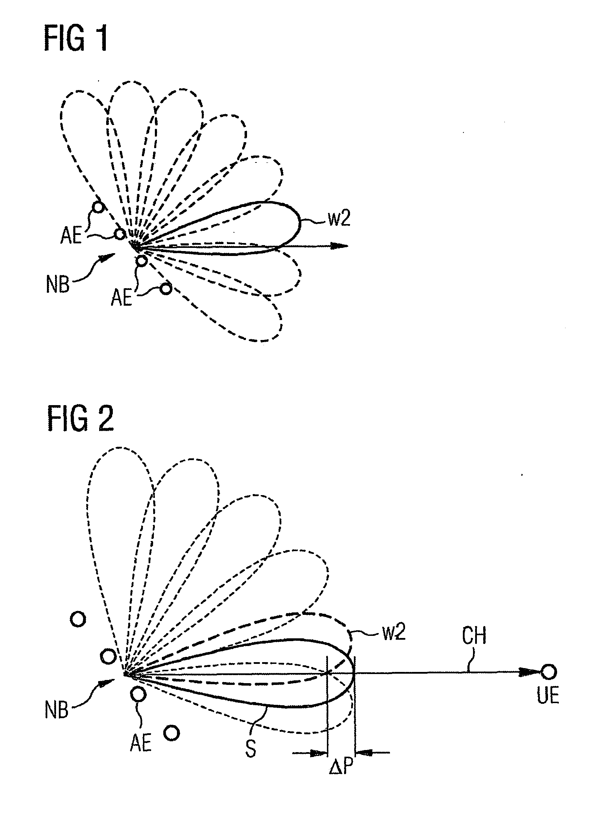

Figur 1 zeigt eine sendende Station NB in Form einer Basisstation eines Mobilfunksystems, die eine adaptive Antenne mit beispielhaft vier Antennenelementen AE aufweist. Mittels der adaptiven Antenne sendet die sendende Station NB zeitlich wiederkehrend mittels gerichteter Strahlen eine Vielzahl von unterschiedlichen Pilotsignalen mit gleicher Form ihrer Sendecharakteristik in unterschiedliche Richtungen, gemäß dem Grid-of-Beams Approach. In der Figur 1 ist nur eines der Pilotsignale w2 mit durchgezogenem Strich dargestellt, während die übrigen Pilotsignale gestrichelt dargestellt wurden.

Figur 2 zeigt zusätzlich zur Figur 1 eine empfangende Station UE in Form einer Teilnehmerstation des Mobilfunksystems. Nunmehr ist die Sendecharakteristik des Pilotsignals w2 aus Figur 1 gestrichelt dargestellt. Mit durchgezogenem Strich wurde in der Figur 2 die Richtcharakteristik von Signalen S dargestellt, die von der sendenden Station NB entsprechend einer Verbindung zwischen ihr und der empfangenden Station UE zu letzterer übertragen werden. Figur 2 zeigt die Abhängigkeit der Empfangsleistung vom Winkel der Aussendung.

Der Figur 2 ist zu entnehmen, dass die Ausbreitungsrichtung des Pilotsignals w2 von der Ausbreitungsrichtung der Signale S der Verbindung abweicht. Die empfangende Station UE führt anhand des Pilotsignals w2 eine Kanalschätzung für den Kanal CH der Verbindung zwischen der sendenden Station NB und der empfangenden Station UE durch. Aufgrund der Abweichung zwischen der Ausbreitungsrichtung des Pilotsignals w2 und der Ausbreitungsrichtung der Signale S der Verbindung ist diese Kanalschätzung jedoch fehlerbehaftet (bei diesem Ausführungsbeispiel wird angenommen, dass Pilotsignal w2 und Signale S der Verbindung Sendecharakteristiken aufweisen die sich nicht in der Form, sondern nur in der Richtung unterscheiden. Es kann jedoch auch umgekehrt sein oder die Charakteristiken können sich sowohl hinsichtlich Form als auch Richtung unterscheiden).

Bei diesem Ausführungsbeispiel wird unterstellt, dass lediglich ein räumlicher Pfad zwischen sendender Station NB und empfangender Station UE vorhanden ist. Der Phasenfehler, der durch diese fehlerhafte Kanalschätzung verursacht wird, beträgt 45˚. Dies liegt daran, dass die Ausbreitungsrichtungen des Pilotsignals w2 und des Signals S um 11˚ voneinander differieren.

Diese Phasendifferenz würde vermieden, wenn die Signale S mit derselben Sendecharakteristik bzw. Ausbreitungsrichtung wie das Pilotsignal w2 übertragen würden. Dann jedoch wäre die Empfangsleistung an der empfangenden Station UE geringer, als wenn die Signale S in Richtung der empfangenden Station UE ausgesendet würden. Die entsprechende Differenz $\Delta P$ der Empfangsleistung an der empfangenden Station UE ist für den genannten Fall in der Figur 2 anschaulich dargestellt. Dieser Verlust der Empfangsleistung wird vermieden, indem bei der Erfindung die Signale S direkt in Richtung der empfangenden Station UE übertragen werden. Der hierdurch eintretende Phasenfehler wird durch eine Vorverzerrung der Signale S kompensiert.

Bei einem ersten Ausführungsbeispiel der Erfindung ermittelt die empfangende Station UE selbstständig den Unterschied zwischen den Ausbreitungsrichtungen des Pilotsignals w2 und des Signals S der Verbindung und führt eine entsprechende zumindest teilweise Korrektur der anhand des Pilotsignals w2 durchgeführten Kanalschätzung durch. Auf diese Weise erfolgt später eine Detektion von mit den Signalen der Verbindung übertragenen Daten mit einer zutreffenderen (da korrigierten) Kanalschätzung. Bei diesem Ausführungsbeispiel wird der empfangenden Station UE von der sendenden Station NB eine Information über die Abweichung der Ausbreitungsrichtung des Pilotsignals w2 von derjenigen der Signale S mitgeteilt.

Bei einem zweiten Ausführungsbeispiel der Erfindung berücksichtigt die sendende Station NB die Abweichung zwischen den Ausbreitungsrichtungen des Pilotsignals w2 und des Signals S der Verbindung beim Erzeugen der auszusendenden Signale der Verbindung, indem in einem ersten Schritt der Fehler der durch die empfangende Station UE durchzuführenden Kanalschätzung für die Verbindung geschätzt wird. Anschließend werden in einem zweiten Schritt die Signale S der Verbindung vor ihrem Aussenden durch die sendende Station NB entsprechend dem geschätzten Fehler vorverzerrt.

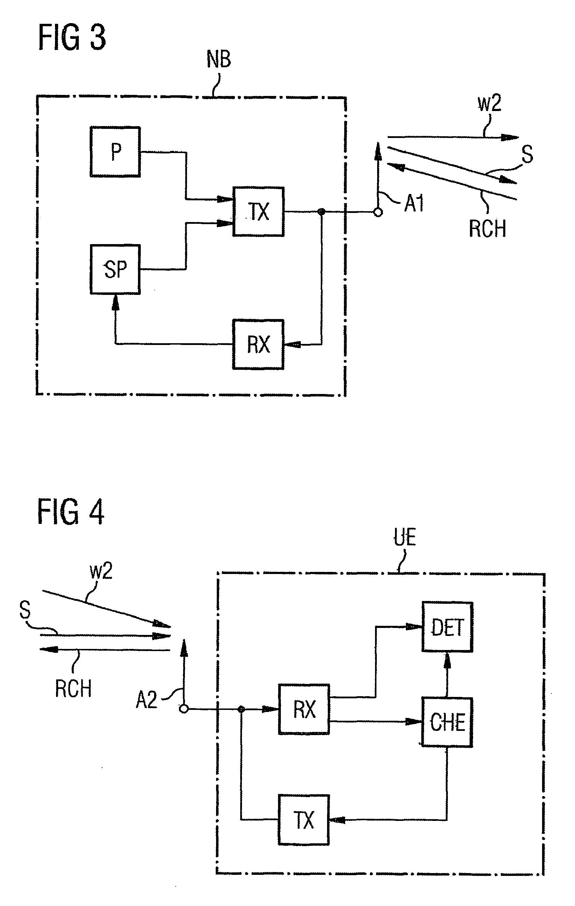

Figur 3 zeigt einige wesentliche Komponenten der sendenden Station NB aus den Figuren 1 und 2. Sie weist eine adaptive erste Antennenvorrichtung A1 auf, die durch in der Figur 1 und der Figur 2 dargestellten Antennenelemente AE gebildet wird. Sie dient zur Aussendung des Pilotsignals w2 und der Signale S der Verbindung. Das Pilotsignal w2 sowie die übrigen in der Figur 1 dargestellten Pilotsignale werden von einer Einheit P erzeugt und über eine Sendeeinheit TX zur ersten Antennenvorrichtung A1 übertragen. Über die erste Antennenvorrichtung A1 empfängt die sendende Station NB auch Ergebnisse RCH der von der empfangenden Station UE anhand des Pilotsignals w2 durchgeführten Kanalschätzung. Die Ergebnisse RCH werden von der ersten Antennenvorrichtung A1 über eine Empfangseinheit RX einer Signalverarbeitungseinheit SP zugeführt. Innerhalb der Signalverarbeitungseinheit SP erfolgt die Generierung der Signale S der Verbindung, einschließlich der beschriebenen Vorverzerrung zur Kompensation der fehlerhaften Kanalschätzung. Dabei verwendet die Signalverarbeitungseinheit SP die Ergebnisse RCH der von der empfangenden Station UE durchgeführten Kanalschätzung.

Bei anderen Ausführungsbeispielen der Erfindung ist es auch möglich, dass die sendende Station NB keine Ergebnisse RCH der von der empfangenden Station UE durchgeführten Kanalschätzung empfängt, sondern selbstständig eine Schätzung des Kanals der Verbindung für die Übertragungsrichtung von der sendenden Station NB zur empfangenden Station UE durchführt. Eine solche Kanalschätzung kann beispielsweise aus der Schätzung des Kanals für die umgekehrte Übertragungsrichtung, also von der empfangenden Station UE zur sendenden Station NB abgeleitet werden.

Figur 4 zeigt einige wesentliche Komponenten der empfangenden Station UE aus der Figur 2. Über eine zweite Antennenvorrichtung A2 empfängt sie das Pilotsignal w2 sowie die Signale S der Verbindung. Beide werden über eine Empfangseinheit RX an nachfolgende Komponenten weitergeleitet. Das Pilotsignal w2 wird an eine Kanalschätzeinheit CHE weitergeleitet, die anhand des Pilotsignals eine Schätzung des Kanals der Verbindung in Richtung von der sendenden Station NB zur empfangenden Station UE durchführt. Die Signale S der Verbindung werden von der Empfangseinheit RX einem Datendetektor DET zugeführt, in den ein Rake-Empfänger integriert ist, dessen Finger gemäß der von der Kanalschätzeinheit CHE durchgeführten Kanalschätzung eingestellt wurden. Das Ergebnis der Kanalschätzung wird von der Kanalschätzeinheit CHE außerdem über eine Sendeeinheit TX und die zweite Antennenvorrichtung A2 in Form der Ergebnisse RCH der Kanalschätzung von der empfangenden Station UE zur sendenden Station NB übertragen.

Die erfindungsgemäße Kompensation des Fehlers der Kanalschätzung durch die empfangende Station UE hat den Vorteil, dass eine kohärente Detektion durch den Datendetektor DET trotz Verwendung des Grid-of-Beams Approaches möglich wird. Der Fehler bei der Bestimmung der Phasenverzerrung durch den Kanal CH, kann zumindest reduziert, wenn nicht gar gänzlich vermieden werden.

Beim zweiten Ausführungsbeispiel der Erfindung wird der systematische Schätzfehler der empfangenden Station UE durch die sendende Station NB prädiziert und kann so in die Berechnung eines Sendefilters, dass der Vorverzerrung der Signale S in der sendenden Station NB dient, mit einbezogen werden. Dadurch kann die sendende Station NB den Fehler der Kanalschätzung durch die empfangende Station UE reduzieren oder sogar vollständig beseitigen. Im Folgenden wird angenommen, dass es sich bei den hier verwendeten Pilotsignalen um den sogenannten S-CPICH (Secondary Common Pilot Channel) des UMTS-Standards handelt. Nachfolgend wird ein Algorithmus zur Durchführung des erfindungsgemäßen Verfahrens genauer erläutert.

Im Folgenden gilt für die Signale S der Verbindung und das Pilotsignal w2:

$$S = p_l * s[n]$$

und

$$w2 = w_{S\text{-}CPICH} * PN ,$$

wobei $p_l$ und $w_{S\text{-}CPICH}$ Gewichtungsfaktoren für die Antennenelemente AE der sendenden Station NB, $s[n]$ die Sequenz der mit dem Signal S zu übertragenden Daten und $PN$ die Sequenz der mit dem Pilotsignal w2 zu übertragenden Pilotsymbolen ist.

Die S-CPICH Pilot-Sequenz wird über das "*Grid of Beams*" übertragen und daher mit einem fest eingestellten Vektor $w_{S\text{-}CPICH}^T$ gewichtet. Der Kanal CH wird mit $Q$ zeitlich auflösbaren Pfaden angenommen, von denen jeder durch die $M$ Eigenvektoren $\alpha_{q,1},...,\alpha_{q,M}$, die zugehörigen komplexen Dämpfungen $\rho_{q,1},...\rho_{q,M}$ und die Verzögerung $v_q$ beschrieben wird. Der Rake-Empfänger der empfangenden Station UE stellt sich daher auf den Pilot-Kanal:

$$h_{S\text{-}CPICH}[n] = \sum_{q=0}^{Q} \sum_{m=1}^{M} \rho_{q,m} \underbrace{w_{S\text{-}CPICH}^T a_{q,m}}_{\alpha_{q,m}^*} \delta[n - \nu_q],$$

ein und adaptiert seine Koeffizienten zu $\sum_{r=1}^{M} \rho_{f,r}^* \alpha_{f,r}$, mit $f = 0,..., Q$. Darin beschreibt der komplexe Faktor $\alpha_{f,r} = w_{S\text{-}CPICH}^T a_{f,r}$ die Verfälschung von Gewichten innerhalb der Finger des im Datendetektor DET angeordneten Rake-Empfängers (im Folgenden "Rake-Gewichte" genannt) innerhalb der empfangenden Station UE durch die S-CPICH- Kanalschätzung.

1) In einem ersten Schritt berechnet die sendende Station NB die auftretende Verfälschung der Rake-Gewichte an der empfangenden Station UE, die durch die Verwendung des S-CPICH für die Kanalschätzung auftritt.

a. Um die relevanten räumlichen Eigenvektoren $\alpha_{f,r}$ zu bestimmen, schätzt die sendende Station NB die Down-link-Kovarianzmatrizen aller $Q$ Pfade. Durch eine Eigenwertzerlegung jeder dieser Kovarianzmatrizen lassen sich die räumlichen Komponenten $\alpha_{f,r}$ ermitteln.

b. Der verwendete S-CPICH Diagrammformungs-Vektor $w_{S\text{-}CPICH}^T$ ist der sendenden Station NB immer bekannt.

c. Durch die Kombination dieser beiden Größen lässt sich die Fehleinstellung des Rake-Empfängers aufgrund der fehlerhaften Schätzung des Kanals CH als

$$\alpha_{f,r} = w_{S\text{-}CPICH}^H a_{f,r}^*$$

für $f = 0,... Q$ und $r = 1,...,M$ im Voraus berechnen.

2) In Schritt zwei werden diese Faktoren $\alpha_{f,r}$ verwendet, um die Vektoren $p_l$ des vorverzerrenden Filters innerhalb der Signalverarbeitungseinheit SP der sendenden Station NB zu bestimmen. Die korrespondierenden Funktionen

$$p_\ell = f_{TxFilter}(\alpha_{1,1}, \rho_{1,1}, a_{1,1}, ..., \alpha_{Q,M}, \rho_{Q,M}, a_{Q,M})$$

hängen von dem verwendeten Signalverarbeitungsansatz (z.B. Wiener Sendefilterung) ab und können für jeden beliebigen Ansatz aus einem angepassten Signalmodell hergeleitet werden. Dieses Signalmodell berücksichtigt die S-CPICH-Kanalschätzung und damit die Verfälschung des Signals $\hat{s}[n]$ am Ausgang des Rake-Empfängers durch den Faktor $\alpha_{f,r}$:

$$\hat{s}[n] = \sum_{f=0}^{Q}\sum_{r=1}^{M} \rho_{f,r}^*\alpha_{f,r} \sum_{q=0}^{Q}\sum_{m=1}^{M}\rho_{q,m}a_{q,m}^{\mathrm{T}}\sum_{\ell=0}^{L}p_\ell s[n-\ell-\nu_q+\nu_f] + \ldots$$

$$+ \sum_{f=0}^{Q}\sum_{r=1}^{M}\alpha_{f,r}\rho_{f,r}^*\eta[n+\nu_f].$$

Die prinzipielle Idee, die Verfälschung der Rake-Gewichtungs-Koeffizienten des Rake-Empfängers innerhalb des Datendetektors DET durch die fehlerhafte Kanalschätzung zu schätzen und in die Herleitung des verwendeten Sendeschemas einzubinden ist unabhängig von dem spezifischen Szenario und der verwendeten Sendestrategie. Daher können beliebige Kriterien zur Herleitung der o.g. Funktion ebenso eingeführt werden, wie die Verwendung von zwei oder mehr Pilotsignalen (also S-CPICH-Strahlen, die in unterschiedliche Richtungen gemäß Figur 1 gerechnet werden) pro Kanalschätzung.

Beispiele:

1) Kanäle mit einem zeitlichen Pfad vom Rang 2

In Szenarien mit zwei diskreten unterschiedlichen Ausbreitungspfaden, die an der empfangenden Station UE mit der gleichen Zeitverzögerung eintreffen, hat die KanalKovarianzmatrix den Rang 2. Dies ist ebenfalls der Fall, wenn die Winkelspreizung des Ausbreitungspfades bewirkt, dass die Kovarianzmatrix zwei von Null verschiedene Eigenwerte aufweist.

Setzt man ein Szenario mit nur einem zeitlich auflösbarem Pfad ( $Q$ =1) vom Rang $M = 2$ voraus und definiert die mittlere Pfadleistung $\sigma_{\rho_{q,m}}^2 = \mathrm{E}\left[\left|\rho_{q,m}\right|^2\right]$, ergeben sich die resultierenden Funktionen $f_{\mathrm{TxFilter}}$ für lineare Sende-filter als:

$$p_{\mathrm{MF}}[n] = \sqrt{\frac{E_{\mathrm{tr}}}{\sigma_s^2(|\alpha_{1,1}|^6\sigma_{\rho_{1,1}}^8 + |\alpha_{1,2}|^6\sigma_{\rho_{1,2}}^8)}}\left(|\alpha_{1,1}|^2\alpha_{1,1}^*\sigma_{\rho_{1,1}}^4 a_{1,1}^* + |\alpha_{1,2}|^2\alpha_{1,2}^*\sigma_{\rho_{1,2}}^4 a_{1,2}^*\right)\delta[n],$$

$$p_{\mathrm{ZF}}[n] = \sqrt{\frac{E_{\mathrm{tr}}}{\sigma_s^2(|\alpha_{1,1}|^2 + |\alpha_{1,2}|^2)}}\left(\alpha_{1,1}^* a_{1,1}^* + \alpha_{1,2}^* a_{1,2}^*\right)\delta[n]$$

and

$$p_{\mathrm{WF}}[n] = \beta_{\mathrm{WF}}\left(\frac{\alpha_{1,1}^*|\alpha_{1,1}|^2\sigma_{\rho_{1,1}}^4 + \frac{1}{2}\alpha_{1,1}^*|\alpha_{1,2}|^2\sigma_{\rho_{1,1}}^2\sigma_{\rho_{1,2}}^2}{|\alpha_{1,1}|^2\sigma_{\rho_{1,1}}^4 + \frac{1}{2}|\alpha_{1,2}|^2\sigma_{\rho_{1,1}}^2\sigma_{\rho_{1,2}}^2 + \xi}a_{1,1}^* + \ldots\right.$$
$$\left. + \frac{\alpha_{1,2}^*|\alpha_{1,2}|^2\sigma_{\rho_{1,2}}^4 + \frac{1}{2}\alpha_{1,2}^*|\alpha_{1,1}|^2\sigma_{\rho_{1,1}}^2\sigma_{\rho_{1,2}}^2}{|\alpha_{1,2}|^2\sigma_{\rho_{1,2}}^4 + \frac{1}{2}|\alpha_{1,1}|^2\sigma_{\rho_{1,1}}^2\sigma_{\rho_{1,2}}^2 + \xi}a_{1,2}^*\right)\delta[n],$$

mit $\xi = \dfrac{\left|\alpha_{1,1}\right|^2 \sigma_{A_1}^2 + \left|\alpha_{1,2}\right|^2 \sigma_{A_2}^2}{E_{tr}} \sigma_\eta^2$ und einer Normierung von $P_{WF}$ auf $\left\|\boldsymbol{p}_{WF}\right\|_2^2 = \dfrac{E_{tr}}{\sigma_s^2}$ durch $\beta_{WF}$.

2) Mehrnutzer CDMA Szenarien

In einem $K$ Nutzer S-CPICH CDMA System mit $Q$ + 1 Kanalpfaden vom Rang 1, kann die Verfälschung der Rake-Gewichte in das Signalmodell und so in die Lösungen für lineare Sendefilter mit einbezogen werden. Bei der Verwendung von Sendefiltern, Kanälen und Rakeempfängern der Ordnung $L$, $Q$ beziehungsweise F, kann die Signalkomponente des Nutzers $k$, die über den $q^{ten}$ Kanalpfad und den $f^{ten}$ Rake-Finger empfangen wurde, mit

$$u_{k,q,f}[\chi m] = \sum_{i=1}^{K} \boldsymbol{p}_i^T X_{k,q,f} s_i^{[m]} + \tilde{\eta}_{k,f}[\chi m + f]$$

dargestellt werden. Dabei enthält der Vektor $\boldsymbol{p}_i$ alle $L+1$ Gewichtsvektoren für den Nutzer $\boldsymbol{i}$, gemäß:

$$\boldsymbol{p}_i = [\boldsymbol{p}_{i,0}^T, \cdots, \boldsymbol{p}_{i,L}^T]^T$$

und die Matrix $X_{k,q,f}$ ist definiert als:

$$X_{k,q,f} = \begin{cases} \sqrt{2}\sigma_{k,q}^2 \alpha_{k,q} A_{k,q,f} C_k S V & f = q, \\ \sigma_{k,f}\sigma_{k,q}\alpha_{k,f} A_{k,q,f} C_k S V & f \neq q, \end{cases} \in \mathbb{C}^{N_a(L+1) \times M}$$

$$A_{k,q,f} = \left[0_{N_a(L+1) \times F+q-f}, 1_{L+1} \otimes a_{k,q}, 0_{N_a(L+1) \times Q+f-q}\right] \in \mathbb{C}^{N_a(L+1) \times L+Q+F+1},$$

$$C_k = \begin{bmatrix} c_k^*[\chi - 1] & \cdots & c_k^*[0] & 0 & \cdots & 0 \\ 0 & c_k^*[\chi - 1] & \cdots & c_k^*[0] & \cdots & 0 \\ \vdots & & \ddots & & & \vdots \\ 0 & \cdots & 0 & c_k^*[\chi - 1] & \cdots & c_k^*[0] \end{bmatrix} \in \mathbb{C}^{L+Q+F+1 \times L+Q+F+\chi},$$

$$S = \left[0_{L+Q+F+\chi \times \gamma\chi - F}, 1_{L+Q+F+\chi}, 0_{L+Q+F+\chi \times (M-\gamma)\chi - L - Q}\right] \in \{0,1\}^{L+Q+F+\chi \times M\chi + \chi - 1},$$

$$V = \begin{bmatrix} 1_M \otimes e_\chi \\ 0_{\chi - 1 \times M} \end{bmatrix} \in \{0,1\}^{M\chi + \chi - 1 \times M},$$

mit der Pfad-Leistung $\sigma_{k,q}^2 = \mathrm{E}\left[\left|\rho_{k,q}\right|^2\right]$ und dem Vektor $\boldsymbol{e_x}$, der die letzte Spalte der $\chi$ dimensionalen Einheitsmatrix

notiert. Des Weiteren selektiert der Vektor $\boldsymbol{e_\mu}$, der die Spalte $\dfrac{M+1}{2}$ der $M$ dimensionalen Einheitsmatrix bezeichnet, das interessierende Chip aus der Impulsantwort des kompletten Systems aus Vorfilter, Kanal, Rake-Empfänger und Code-Korrelator.

2.1 Lösung für die Verwendung eines Signalangepassten Filters (Matched Filter)

Das Signalangepasste Filter folgt der Maximierung der gewünschten Signalkomponente und führt zu:

$$p_{\mathrm{MF},k} = \beta_{MF} \sum_{f=0}^{F} \sqrt{2}\sigma_{k,f} X_{k,f,f}^* e_\mu,$$

$$\beta_{MF} = \sqrt{\frac{E_{\mathrm{tr}}}{\sum_{l=1}^{K} \sigma_s^2 e_\mu^{\mathrm{T}} \sum_{i=0}^{F} \sqrt{2}\sigma_{k,i} X_{k,i,i}^{\mathrm{T}} \sum_{j=0}^{F} \sqrt{2}\sigma_{k,j} X_{k,j,j}^* e_\mu}}$$

2.2 Lösung für die Verwendung eines Erwartungstreuen Sendefilters (Zero Forcing Filter)

Dem Zero-Forcing-Prinzip folgend erhält man das Erwartungstreue Sendefilter durch Stapeln von

$$b_{i,q,f} = \begin{cases} \sqrt{2}\sigma_{i,q}^2 & \text{for } i = k \text{ and } q = f \\ 0 & \text{else} \end{cases}$$

und $\boldsymbol{X}_{k,q,f}$ für $\{k,q,f\}=\{1,0,0\},...,\{1, Q, 0\},...,\{1, Q, 0\},...,\{1, Q, F\},...,\{K, Q, F\}$ zu $\boldsymbol{b_k}$ und $\boldsymbol{X}$ zu :

$$p_{\mathrm{ZF},k} = \sqrt{\frac{E_{\mathrm{tr}}}{\sum_{k=1}^{K} \sigma_s^2 b_k^{\mathrm{T}} X^{\dagger,*} X^{\dagger,\mathrm{T}} b_k}} X^{\dagger,\mathrm{T}} b_k.$$

2.3 Lösung für die Verwendung eines Wiener Sendefilters

Das Wiener Sendefilter im gegebenen Szenario ergibt sich zu:

$$p_{\mathrm{WF},k} = \sqrt{\frac{E_{\mathrm{tr}}}{\sum_{k=1}^{K} \sigma_s^2 b_k^{\mathrm{T}} X^{\mathrm{T}} \left(X^* X^{\mathrm{T}} + \gamma\frac{\sigma_\eta^2}{E_{\mathrm{tr}}}1\right)^{-2} X^* b_k}} \left(X^* X^{\mathrm{T}} + \gamma\frac{\sigma_\eta^2}{E_{\mathrm{tr}}}1\right)^{-1} X^* b_k.$$

Erklärung einiger der vorstehend verwendeten Symbole:

$\delta[n]$     Dirac Delta Impuls zum Zeitpunkt n

$s[n]$     Signal s zum Chip-Zeitpunkt n

$s^{[m]}$     Signal s zum Symbol-Zeitpunkt m

$|x|$     Betrag der komplexen Größe x

$( )^*$     Konjugiert komplexe Matrix

$( )^T$     Transponierte Matrix

$( )^H$     Hermitsche Matrix, d.h. komplexkonjugierte Transponierte Matrix

$\|x\|_2$     Norm des Vektors x

$1_d$     d dimensionale Einheitsmatrix

$\otimes$     Kroneckerprodukt

$( )^t$     Moore-Penrose Pseudo-Inverse einer Matrix

**Patentansprüche**

1. Verfahren zum Übertragen von Signalen (S) einer Verbindung zwischen einer sendenden Station und einer empfangenden Station eines Funkkommunikationssystems, bei dem

   - zwischen den Stationen wenigstens ein Pilotsignal (w2) übertragen wird für eine Schätzung wenigstens eines Kanals (CH) der Verbindung durch die empfangende Station,
   - Ergebnisse der Kanalschätzung zur Detektion von mittels der Signale (S) der Verbindung zur empfangenden Station zu übertragenden Daten bestimmt sind,
   - eine Abweichung zwischen der Sendecharakteristik des für die Kanalschätzung verwendeten Pilotsignals (w2) und der Sendecharakteristik der Signale (S) der Verbindung beim Erzeugen der auszusendenden Signale der Verbindung durch die sendende Station und/oder beim Verarbeiten der empfangenen Signale der Verbindung durch die empfangende Station berücksichtigt wird,

   **dadurch gekennzeichnet dass**

   - zur Berücksichtigung der Abweichung zwischen den Ausbreitungsrichtungen des Pilotsignals (w2) und der Signale (S) in einem ersten Schritt ein Maß für die Abweichung der Sendecharakteristik geschätzt wird und in einem zweiten Schritt die Signale (S) der Verbindung vor ihrem Aussenden durch die sendende Station entsprechend dem Maß vorverzerrt werden.

2. Verfahren nach Anspruch 1, bei dem zur Durchführung des ersten Schrittes

   - Ergebnisse einer Schätzung des wenigstens einen Kanals (CH) der Verbindung in der sendenden Station bereitgestellt werden
   - und zum Bestimmen des Maßes der Abweichung die Ergebnisse dieser Kanalschätzung mit einer Information über die Sendecharakteristik des Pilotsignals (w2) verknüpft werden.

3. Verfahren nach Anspruch 2, bei dem

   - die in der sendenden Station bereitgestellten Ergebnisse der Kanalschätzung jeweils eine Kovarianzmatrix für jeden der Kanäle (CH) der Verbindung betreffen,
   - für jede Kovarianzmatrix eine Eigenwertzerlegung erfolgt, indem Eigenvektoren mit den dominanten Eigenwerten bestimmt werden,
   - und das Maß der Abweichung bestimmt wird, indem ein Ergebnis der Eigenwertzerlegung mit der Information über die Sendecharakteristik des Pilotsignals (w2) verknüpft wird.

4. Verfahren nach Anspruch 2 oder 3, bei dem die in der sendenden Station bereitgestellten Ergebnisse der Kanalschätzung durch die sendende Station (von der empfangenden Station empfangen werden.

5. Verfahren nach Anspruch 2 oder 3, bei dem die in der sendenden Station bereitgestellten Ergebnisse der Kanalschätzung durch eine Kanalschätzung von der sendenden Station erzeugt werden.

**6.** Verfahren nach Anspruch 5, bei dem
die in der sendenden Station bereitgestellten Ergebnisse der Kanalschätzung durch die sendende Station aus einer von der sendenden Station für die Übertragungsrichtung von der empfangenden Station zur sendenden Station durchgeführten Kanalschätzung abgeleitet werden.

**7.** Verfahren nach einem der vorstehenden Ansprüche, bei dem die empfangende Station für die Datendetektion einen Rake-Empfänger verwendet.

**8.** Verfahren nach einem der vorstehenden Ansprüche, bei dem die sendende Station eine Mehrzahl von Pilotsignalen in jeweils festgelegte Richtungen aussendet und die empfangende Station wenigstens eines dieser Pilotsignale (w2) für die Kanalschätzung verwendet.

**9.** Station zum Senden von Signalen (S) einer Verbindung zu einer empfangenden Station eines Funkkommunikationssystems,

- mit Mitteln (P, TX) zum Übertragen wenigstens eines Pilotsignals (w2) zur empfangenden Station für eine Schätzung wenigstens eines Kanals (CH) der Verbindung durch die empfangende Station, wobei Ergebnisse der Kanalschätzung zur Detektion von mittels der Signale (S) der Verbindung zur empfangenden Station zu übertragenden Daten bestimmt sind,
- mit Mitteln (SP) zum Erzeugen der auszusendenden Signale (S) der Verbindung unter Berücksichtigung einer Abweichung zwischen der Sendecharakteristik des für die Kanalschätzung verwendeten Pilotsignals (w2) und der Sendecharakteristik der Signale (S) der Verbindung,

**gekennzeichnet durch**

- Mittel für eine Schätzung eines Maßes für die Abweichung der Sendecharakteristik, und
- Mittel für die Vorverzerrung der Signale (S) der Verbindung entsprechend dem Maß vor ihrem Aussenden **durch** die sendende Station zur Berücksichtigung der Abweichung zwischen den Ausbreitungsrichtungen des Pilotsignals (w2) und der Signale (S).

**Claims**

**1.** Method for transmitting signals (S) of a connection between a transmitting station and a receiving station of a radio communication system, in which

- at least one pilot signal (w2) is transmitted between the stations for an estimation of at least one channel (CH) of the connection by the receiving station,
- results of the channel estimation are intended for the detection of data to be transmitted to the receiving station by means of the signals (S) of the connection,
- a deviation between the transmitting characteristic of the pilot signal (w2) used for the channel estimation and the transmitting characteristic of the signals (S) of the connection is taken into consideration in the generation of the signals of the connection to be sent out by the transmitting station and/or in the processing of the received signals of the connection by the receiving station,

**characterized in that**

- to take into consideration the deviation between the directions of propagation of the pilot signal (w2) and of the signals (S) a measure of the deviation of the transmitting characteristic is estimated in a first step and the signals (S) of the connection, before they are sent out by the transmitting station, are pre-distorted in accordance with the measure in a second step.

**2.** Method according to Claim 1, in which, to carry out the first step

- results of an estimation of the at least one channel (CH) of the connection are provided in the transmitting station
- and to determine the measure of the deviation, the results of this channel estimation are combined with information about the transmitting characteristic of the pilot signal (w2).

3. Method according to Claim 2, in which

   - the results of the channel estimation, provided in the transmitting station, in each case relate to a covariance matrix for each of the channels (CH) of the connection,
   - for each covariance matrix, an eigenvalue decomposition is effected by determining eigenvectors with the dominant eigenvalues
   - and the measure of the deviation is determined by combining a result of the eigenvalue decomposition with the information about the transmitting characteristic of the pilot signal (w2).

4. Method according to Claim 2 or 3, in which the results of the channel estimation, provided in the transmitting station, are received by the transmitting station (from the receiving station).

5. Method according to Claim 2 or 3, in which the results of the channel estimation, provided in the transmitting station, are generated by a channel estimation by the transmitting station.

6. Method according to Claim 5, in which the results of the channel estimation, provided in the transmitting station, are derived by the transmitting station from a channel estimation carried out by the transmitting station for the direction of transmission from the receiving station to the transmitting station.

7. Method according to one of the preceding claims, in which the receiving station uses a rake receiver for the data detection.

8. Method according to one of the preceding claims, in which the transmitting station sends out a plurality of pilot signals in in each case fixed directions and the receiving station uses at least one of these pilot signals (w2) for the channel estimation.

9. Station for transmitting signals (S) of a connection to a receiving station of a radio communication system,

   - with means (P, TX) for transmitting at least one pilot signal (w2) for the receiving station for an estimation of at least one channel (CH) of the connection by the receiving station, wherein results of the channel estimation are intended for the detection of data to be transmitted to the receiving station by means of the signals (S) of the connection,
   - with means (SP) for generating the signals (S) of the connection, to be sent out, taking into consideration a deviation between the transmitting characteristic of the pilot signal (w2) used for the channel estimation and the transmitting characteristic of the signals (S) of the connection,

   **characterized by**

   - means for an estimation of a measure of the deviation of the transmitting characteristic, and
   - means for the pre-distortion of the signals (S) of the connection in accordance with the measure before they are sent out by the transmitting station, to take into consideration the deviation between the directions of propagation of the pilot signal (w2) and of the signals (S).

**Revendications**

1. Procédé de transmission de signaux (S) d'une liaison entre une station émettrice et une station réceptrice d'un système de radiocommunication dans lequel

   - au moins un signal pilote (w2) est transmis entre les stations pour une estimation d'au moins un canal (CH) de la liaison par la station réceptrice,
   - des résultats de l'estimation de canal sont destinés à la détection de données à transmettre au moyen des signaux (S) de la liaison vers la station réceptrice,
   - une différence entre la caractéristique d'émission du signal pilote (w2) utilisé pour l'estimation de canal et la caractéristique d'émission des signaux (S) de la liaison est prise en compte par la station émettrice lors de la production des signaux de la liaison à émettre par la station émettrice et/ou lopars la station réceptrice lors du traitement des signaux de la liaison reçus par la station réceptrice,

**caractérisé en ce que**

- aux fins de la prise en compte de la différence entre les sens de propagation du signal pilote (w2) et des signaux (S), dans une première étape, une mesure de la différence de la caractéristique d'émission est estimée et, dans une deuxième étape, les signaux (S) de la liaison sont pré-corrigés avant leur émission par la station émettrice selon la mesure.

2. Procédé selon la revendication 1, dans lequel, aux fins de l'exécution de la première étape,

- des résultats d'une estimation de l'au moins un canal (CH) de la liaison sont mis à disposition dans la station émettrice et,
- pour déterminer la mesure de la différence, les résultats de cette estimation de canal sont associés à une information sur la caractéristique d'émission du signal pilote (w2).

3. Procédé selon la revendication 2, dans lequel

- les résultats de l'estimation de canal mis à disposition dans la station émettrice concernent respectivement une matrice de covariance pour chacun des canaux (CH) de la liaison,
- pour chaque matrice de covariance, il y a décomposition en valeurs propres par détermination de vecteurs propres avec les valeurs propres dominantes et
- la mesure de la différence est déterminée par association d'un résultat de la décomposition en valeurs propres à l'information sur la caractéristique d'émission du signal pilote (w2).

4. Procédé selon la revendication 2 ou 3, dans lequel les résultats, mis à disposition dans la station émettrice, de l'estimation de canal par la station émettrice sont reçus par la station réceptrice.

5. Procédé selon la revendication 2 ou 3, dans lequel les résultats de l'estimation de canal mis à disposition dans la station émettrice sont générés par une estimation de canal par la station émettrice.

6. Procédé selon la revendication 5, dans lequel les résultats, mis à disposition dans la station émettrice, de l'estimation de canal par la station émettrice sont dérivés d'une estimation de canal effectuée par la station émettrice pour le sens de transmission allant de la station réceptrice vers la station émettrice.

7. Procédé selon l'une des revendications précédentes, dans lequel la station réceptrice utilise un récepteur en râteau aux fins de la détection de données.

8. Procédé selon l'une des revendications précédentes, dans lequel la station émettrice émet une pluralité de signaux pilotes dans des directions respectivement déterminées et la station réceptrice utilise au moins l'un de ces signaux pilotes (w2) pour l'estimation de canal.

9. Station pour envoyer des signaux (S) d'une liaison à une station réceptrice d'un système de radiocommunication,

- avec des moyens (P, TX) pour transmettre au moins un signal pilote (w2) à la station réceptrice pour une estimation d'au moins un canal (CH) de la liaison par la station réceptrice, des résultats de l'estimation de canal étant destinés à la détection de données à transmettre au moyen des signaux (S) de la liaison vers la station réceptrice,
- avec des moyens (SP) pour générer les signaux (S) de la liaison à émettre compte tenu d'une différence entre la caractéristique d'émission du signal pilote (w2) utilisé pour l'estimation de canal et la caractéristique d'émission des signaux (S) de la liaison,

**caractérisée par**

- des moyens pour une estimation d'une mesure pour la différence de la caractéristique d'émission et
- des moyens pour la pré-correction des signaux (S) de la liaison selon la mesure avant leur émission par la station émettrice aux fins de la prise en compte de la différence entre les sens de propagation du signal pilote (w2) et des signaux (S).

FIG 1

FIG 2

## FIG 3

NB

P → TX

SP → TX

SP ← RX

TX → RX

A1

w2 → S

RCH

## FIG 4

UE

w2
S
RCH

A2 → RX

RX → DET

RX → CHE

CHE → DET

CHE → TX

TX → RX

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1324510 A